# EUROPEAN PATENT SPECIFICATION

(11) **EP 3 913 015 B1**
(45) Date of publication and mention of the grant of the patent: **26.06.2024**
(21) Application number: 19909895.5
(22) Date of filing: 30.09.2019
(51) Int. Cl.: C08J 9/26, B29C 67/20, B29K 23/00, B29L 7/00, C08J 5/18

(54) **PRODUCTION METHOD FOR POLYOLEFIN MICROPOROUS FILM**
VERFAHREN ZUR HERSTELLUNG EINER MIKROPORÖSEN POLYOLEFINFOLIE
PROCÉDÉ DE PRODUCTION DE FILM MICROPOREUX DE POLYOLÉFINE

(30) Priority: 15.01.2019 JP 2019004455
(43) Date of publication of application: 24.11.2021
(73) Proprietor: Toray Industries, Inc., Tokyo 103-8666 (JP)
(72) Inventor: SATO, Go, Nasushiobara-shi, Tochigi 329-2763 (JP); SATO, Ai, Nasushiobara-shi, Tochigi 329-2763 (JP)
(74) Representative: Mewburn Ellis LLP
(86) International application number: PCT/JP2019/038555
(87) International publication number: WO 2020/148946

(56) References cited:
- EP-A1- 2 833 439
- WO-A1-2011/062176
- WO-A1-2018/164057
- JP-A- 2002 338 728
- JP-A- 2006 124 652
- JP-A- 2008 106 237
- US-A1- 2010 099 838

## Description

### TECHNICAL FIELD

The present invention relates to a method for producing a polyolefin microporous membrane.

### BACKGROUND ART

Microporous membranes have various pore diameters, pore shapes, and number of pores. Owing to the characteristics that can be expressed due to the unique structure, the microporous membranes are used in various fields including filters such as filtration membranes and dialysis membranes, battery separators, and separators for electrolytic capacitors. Among such microporous membranes, microporous membranes containing a polyolefin as a resin material are widely used as secondary battery separators because they are excellent in chemical resistance, insulating properties, mechanical strength, and the like, and have shutdown characteristics.

In the above-mentioned applications, abnormal properties (reduction of the molecular weight, discoloration, and generation of carbides) of the resin during the production process greatly affect the quality of the product.

Polyolefins are melt-kneaded and formed into a film. It is known that if oxygen is mixed in during melting, thermal oxidative deterioration of the resin may occur due to the heat during melt-kneading, resulting in discoloration of the resin, generation of carbides, reduction of the molecular weight due to molecular chain breakage, and decrease in strength. Therefore, as a technique for preventing oxidative deterioration during melt processing, methods described in Patent Documents 1 to 3 shown below are adopted.

For example, Patent Document 1 discloses a method of forming a film by adding an antioxidant in order to reduce oxidative deterioration of a resin raw material.

Patent Document 2 discloses a method in which, in order to reduce deterioration of a resin composition, the screw configuration of a resin raw material supply part of an extruder is specified, the barrel temperature of the extruder is set within a specific range, and the oxygen concentration in a resin path starting from a raw material tank through a hopper to a raw material charging part into the extruder is controlled by the supply of a nitrogen gas.

Further, Patent Document 3 discloses, in order to reduce the quality deterioration, a method of melt-kneading a polyolefin in a state where a sliding part of an extruder is sealed with an inert gas.

Further, Patent Document 4 discloses a multilayer porous membrane comprising: a porous membrane containing a polyolefin resin as a main component; and a porous layer containing an inorganic filler and a resin binder and laminated on at least one surface of the porous membrane.

Further, Patent Document 5 discloses a polyolefin microporous film comprising polyethylene and polypropylene having a viscosity average molecular weight of 100,000 or higher, the polypropylene being contained in an amount 4 wt% or more and the terminal vinyl group concentration per 10,000 carbon atoms in the polyolefin constituting the microporous film being 2 or more as measured by infrared spectroscopy.

### PRIOR ART DOCUMENTS

### PATENT DOCUMENTS

Patent Document 1: Japanese Patent Laid-open Publication No. 2010-215901
Patent Document 2: Japanese Patent Laid-open Publication No. 2011-255652
Patent Document 3: Japanese Patent Laid-open Publication No. 2001-79830
Patent Document 4: EP 2 833 439 A1
Patent Document 5: US 2010/099838 A1

### SUMMARY OF THE INVENTION

### PROBLEMS TO BE SOLVED BY THE INVENTION

In the methods disclosed in Patent Documents 1 to 3, although improvements have been made to reduce thermal oxidative deterioration of the resin in the production of a resin composition using an extruder, the techniques have room for improvement from the viewpoint of reduction of oxidative deterioration and improvement of discharge accuracy from an extruder.

An oxidatively deteriorated product of a resin or the like contained in a resin composition may cause an abnormality in appearance and decrease in strength. In order to reduce oxidative deterioration, a method of performing melt kneading in an inert gas atmosphere can be mentioned. In this method, however, at the time of supply of the inert gas, fluctuations in the discharge amount from the extruder and poor appearance, which are caused by blowout of the charged raw material and air entrainment, may occur.

In consideration of the above-mentioned circumstances, an object of the present invention is to provide a polyolefin microporous membrane that is excellent in surface appearance and uniformity of membrane strength as well as in discharge accuracy of a polyolefin solution from an extruder by preventing oxidative deterioration of a polyolefin during melt processing in the production process to reduce abnormal properties of the resin.

### SOLUTIONS TO THE PROBLEMS

Under the above-mentioned circumstances, as a result of diligent studies, the present inventor found the following matter. Specifically, a method in which in the steps of supplying a polyolefin resin and a plasticizer to an extruder, and melt-kneading the polyolefin resin and the plasticizer in the extruder, at a stage after the polyolefin resin is charged into the extruder and has a temperature equal to or lower than an oxidation start temperature, an inert gas is supplied to the extruder from a predetermined position of the extruder, and a resin composition is melt-kneaded in an inert gas atmosphere, is superior to the conventional methods for producing a polyolefin microporous membrane with respect to the above-mentioned problems. Thus, the present inventor arrived at the present invention.

Specifically, the present invention is as follows.

A method for producing a polyolefin microporous membrane, the method including the steps of: melt-kneading a polyolefin resin and a plasticizer with an extruder to prepare a polyolefin solution, then discharging the polyolefin solution into a sheet from a die, and then stretching the sheet and removing the plasticizer, wherein in the steps of supplying the polyolefin resin and the plasticizer to the extruder, and heating and kneading the polyolefin resin and the plasticizer in the extruder, at a stage after the polyolefin resin is charged into the extruder and before the plasticizer is charged, an inert gas is supplied to the extruder from a position that is located downstream from a raw material inlet of the extruder by 5 to 20% of a screw length of the extruder, and a resin composition is melt-kneaded in an inert gas atmosphere.

A polyolefin microporous membrane produced by the above-mentioned production method, the polyolefin microporous membrane having a pin puncture strength of 400 gf/20 um or more and 1,500 gf/20 um or less, and a range of fluctuation of the pin puncture strength of 1% or less, is also disclosed herein but not separately claimed.

A lithium ion secondary battery including the above-mentioned polyolefin microporous membrane is also disclosed herein but not separately claimed.

### EFFECTS OF THE INVENTION

According to the present invention, it is possible to produce a polyolefin microporous membrane suitable as a secondary battery separator in a process in which the yield rate, quality, and yield are improved.

### BRIEF DESCRIPTION OF THE DRAWING

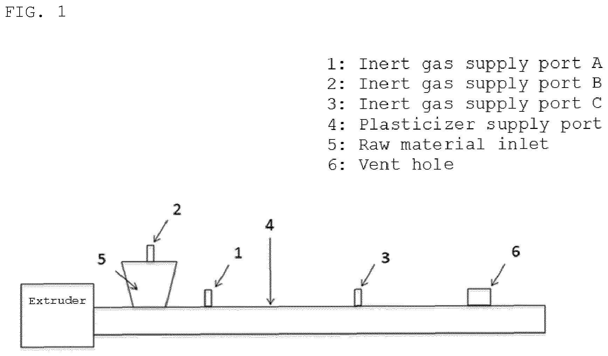

Fig. 1 is a schematic view of an extrusion step of a method for producing a polyolefin microporous membrane according to an embodiment of the present invention.

### EMBODIMENTS OF THE INVENTION

Hereinafter, the present invention will be described with reference to preferred embodiments. In the present description, a "polyolefin microporous membrane" refers to a microporous membrane containing a polyolefin as a main component, and preferably refers to a microporous membrane containing 90 mass% or more of a polyolefin based on the total amount of the microporous membrane. A "microporous membrane" refers to a membrane having a structure in which a large number of micropores inside the membrane are connected so that at least one of a gas and a liquid can pass from one surface to the other surface of the membrane.

### [Polyolefin resin]

As for the polyolefin resin that constitutes the polyolefin microporous membrane, a polyethylene resin or a polypropylene resin can be preferably used.

### [Polyethylene resin]

The polyethylene resin is (a) an ultra high molecular weight polyethylene, (b) a polyethylene other than an ultra high molecular weight polyethylene, (c) a mixture (i.e. a polyethylene composition) of an ultra high molecular weight polyethylene and another polyethylene, or (d) a mixture (i.e. a polyolefin composition) of any one of (a) to (c) and a polyolefin other than a polyethylene. In any case, the mass average molecular weight (Mw) of the polyethylene resin is not particularly limited, but is preferably 1 × 10⁴ to 1 × 10⁷, more preferably 1 × 10⁴ to 5 × 10⁶, and particularly preferably 1 × 10⁴ to 4 × 10⁶.

### (a) When the polyethylene resin contains an ultra high molecular weight polyethylene

The ultra high molecular weight polyethylene has a Mw of 5 × 10⁵ or more. The ultra high molecular weight polyethylene is not limited to an ethylene homopolymer, and may also be an ethylene-α-olefin copolymer containing a small amount of other α-olefins. The α-olefins other than ethylene are preferably propylene, butene-1, pentene-1, hexene-1,4-methylpentene-1, octene-1, vinyl acetate, methyl methacrylate, and styrene. The Mw of the ultra high molecular weight polyethylene is preferably 1 × 10⁶ to 15 × 10⁶, and more preferably 1 × 10⁶ to 5 × 10⁶. The ultra high molecular weight polyethylene is not limited to a single substance, and may be a mixture of two or more ultra high molecular weight polyethylenes. Examples of the mixture include a mixture of two or more ultra high molecular weight polyethylenes different in Mw.

### (b) When the polyethylene resin contains a polyethylene other than an ultra high molecular weight polyethylene

The polyethylene other than an ultra high molecular weight polyethylene has a Mw of 1 × 10⁴ or more and less than 5 × 10⁵, and is preferably a high density polyethylene, a medium density polyethylene, a branched low density polyethylene, or a linear low density polyethylene, and is more preferably a high density polyethylene. The polyethylene having a Mw of 1 × 10⁴ or more and less than 5 × 10⁵ is not limited to an ethylene homopolymer, and may also be a copolymer containing a small amount of other α-olefins such as propylene, butene-1, and hexene-1. The copolymer is preferably one produced using a single site catalyst. The polyethylene other than an ultra high molecular weight polyethylene is not limited to a single substance, and may be a mixture of two or more polyethylenes other than an ultra high molecular weight polyethylene. Examples of the mixture include a mixture of two or more high density polyethylenes different in Mw, a mixture of two or more medium density polyethylenes different in Mw, and a mixture of two or more low density polyethylenes different in Mw.

### (c) When the polyethylene resin contains a polyethylene composition

The polyethylene composition is a mixture containing an ultra high molecular weight polyethylene having a Mw of 5 × 10⁵ or more and another polyethylene (at least one polyethylene selected from the group consisting of a high density polyethylene, a medium density polyethylene, a branched low density polyethylene, and a linear low density polyethylene). The ultra high molecular weight polyethylene and the other polyethylene may be the same as described above. The other polyethylene preferably has a Mw of 1 × 10⁴ or more and less than 5 × 10⁵. In the polyethylene composition, the molecular weight distribution [mass average molecular weight/number average molecular weight (Mw/Mn)] can be easily controlled according to the application. The polyethylene composition is preferably a composition of the above-mentioned ultra high molecular weight polyethylene and a high density polyethylene. The content of the ultra high molecular weight polyethylene in the polyethylene composition is preferably 1 mass% or more, and more preferably 10 to 80 mass% based on 100 mass% in total of the polyethylene composition.

### (d) When the polyethylene resin contains a mixture (i.e. a polyolefin composition) with a polyolefin other than a polyethylene

It is possible to use, as the polyolefin other than a polyethylene, at least one polyolefin selected from the group consisting of polypropylene, polybutene-1, polypentene-1, polymethylpentene, polyhexene-1, polyoctene-1, polyvinyl acetate, polymethyl methacrylate, polystyrene, and an ethylene-α-olefin copolymer each having a Mw of 1 × 10⁴ to 4 × 10⁶, and a polyethylene wax having a Mw of 1 × 10³ to 1 × 10⁴. Polypropylene, polybutene-1, polypentene-1, polymethylpentene, polyhexene-1, polyoctene-1, polyvinyl acetate, polymethyl methacrylate, and polystyrene are not limited to a homopolymer, and may also be a copolymer containing other α-olefins. The percentage of the polyolefin other than a polyethylene is preferably 50 mass% or less, and more preferably 20 mass% or less based on 100 mass% in total of the polyolefin composition.

### [Polypropylene resin]

The type of the polypropylene is not particularly limited, and the polypropylene may be any of a propylene homopolymer, a copolymer of propylene and another olefin and/or diolefin, and a mixture thereof, but a homopolymer is preferable. As for the copolymer, either a random copolymer or a block copolymer can be used. As for the olefin other than propylene, ethylene or an α-olefin having 4 to 8 carbon atoms is preferable. Examples of the α-olefin having 4 to 8 carbon atoms include butene-1, pentene-1, hexene-1, 4-methyl-1-pentene, and octene-1.

The diolefin preferably has 4 to 14 carbon atoms. Examples of the diolefin having 4 to 14 carbon atoms include butadiene, 1,5-hexadiene, 1,7-octadiene, and 1,9-decadiene. The Mw of the polypropylene is preferably 1 × 10⁵ or more and 1 × 10⁷ or less, and particularly preferably 1 × 10⁵ or more and 5 × 10⁶ or less.

Further, the polyolefin microporous membrane may contain, as long as the effects of the present invention are not impaired, various additives such as an antioxidant, a heat stabilizer, an antistatic agent, an ultraviolet absorber, an antiblocking agent or a filler, a crystal nucleating agent, and a crystallization retarder. Further, in the present disclosure, the polyolefin microporous membrane may contain a crystal nucleating agent. The crystal nucleating agent is not particularly limited, and a known compound-based or particulate crystal nucleating agent can be used. The nucleating agent may be used in the form of a masterbatch in which the nucleating agent is mixed and dispersed in the polyolefin resin in advance.

### [Plasticizer]

The plasticizer is not limited as long as it is a good solvent for the polyolefin resin, but it is preferably liquid at room temperature. As the plasticizer, for example, aliphatic or cyclic hydrocarbons such as nonane, decane, decalin, p-xylene, undecane, dodecane, and liquid paraffin, mineral oil distillates having a boiling point comparable to those of the hydrocarbons, and the like can be used. The plasticizer described above preferably has a viscosity at 25°C of 0.03 to 0.5 Pa·s, and particularly preferably 0.05 to 0.2 Pa·s.

If the viscosity at 25°C is less than 0.03 Pa·s, nonuniform discharge may occur and kneading may be difficult, while if the viscosity at 25°C exceeds 0.5 Pa·s, removal of the plasticizer in the subsequent process may not be easy. Among the plasticizers, liquid paraffin, decalin, and p-xylene are preferable from the viewpoint of compatibility with the polyolefin. The blend ratio between the polyolefin resin and the plasticizer (total amount) is 10 to 50 mass%, preferably 15 to 40 mass% of the polyolefin resin and 90 to 50 mass%, preferably 85 to 60 mass% of the plasticizer based on 100 mass% in total of the polyolefin resin and the plasticizer. If the amount of the polyolefin is less than 10 mass% (if the amount of the plasticizer exceeds 90 mass%), at the time of forming the polyolefin solution into a sheet, it tends to be difficult to form a sheet due to significant swelling or neck-in at the die outlet. Meanwhile, if the amount of the polyolefin resin exceeds 50 mass% (if the amount of the plasticizer is less than 50 mass%), it tends to be difficult to prepare a uniform solution.

### [Method for producing polyolefin microporous membrane]

The method for producing a polyolefin microporous membrane according to the present invention preferably includes the following steps.
(1) A step of charging a polyolefin resin into an extruder.
(2) A step of supplying an inert gas into the extruder.
(3) A step of heating the polyolefin resin.
(4) A step of adding a plasticizer to the heated polyolefin resin, and mixing and kneading the components to prepare a polyolefin solution.
(5) A step of sucking and ejecting gases (the air and an inert gas) in the extruder after the preparation of the polyolefin solution.
(6) A step of extruding the kneaded polyolefin solution from the extruder and discharging the polyolefin solution into a sheet from a die.
(7) A step of cooling the polyolefin solution extruded into a sheet to form a gel-like sheet.
(8) A step of heating and stretching the gel-like sheet.
(9) A step of removing the plasticizer from the stretched gel-like sheet to form a microporous membrane (film).
(10) A step of drying the film.

Hereinafter, the steps will be described in order.

### (1) A step of charging a polyolefin resin into an extruder

In this step, a polyolefin resin is supplied into an extruder from a raw material charging part of the extruder. At the time of charging the resin, the air that may cause oxidation of a polyolefin solution may be mixed in. In order to prevent mixing of the air, steps (2) and (5) described later are provided to reduce mixing of the air and oxidative deterioration associated with the mixed air.

### (2) A step of supplying an inert gas into the extruder

In this step, an inert gas is supplied into the extruder from a gas injection part of the extruder. The inert gas refers to a gas having low chemical reactivity, and examples thereof include an argon gas, a helium gas, a carbon dioxide gas, and a nitrogen gas. In general, it is preferable to use a nitrogen gas. As for a method of supplying the inert gas, it is preferable to employ a method of supplying the inert gas to a resin flow path in the extruder from a position separated from the raw material charging part of the extruder by at least a certain distance from the viewpoint of reducing the blow-up of the raw material. As for the position for supplying the inert gas, it is preferable to supply the inert gas from a position that is located downstream from a raw material inlet of the extruder by 5 to 10% of the screw length of the extruder from the viewpoint of effectively reducing oxidative deterioration.

Further, as for the timing of supplying the inert gas, it is preferable to supply the inert gas when the resin raw material heated in the extruder has a temperature equal to or lower than the deterioration start temperature (usually, 250°C or less for a polyethylene). Further, from the viewpoint of reducing the generation of bubbles in the polyolefin solution due to the injection of the inert gas and poor appearance caused by the bubbles, it is preferable to supply the inert gas before adding a plasticizer to the polyolefin resin. The amount of the inert gas supplied is preferably 1 to 50 L/min, and more preferably 10 to 20 L/min from the viewpoint of stability of supply of the inert gas, reduction of blow-up of the raw material, and reduction of strength variation of a film formed from the raw material. The flow rate of supply of the inert gas is preferably 1 to 20 m/s, and more preferably 5 to 10 m/s as the flow rate in the nozzle of an inert gas supply part.

### (3) A step of heating the polyolefin resin

In this step, the supplied polyolefin resin is heated in the extruder. The specific heating temperature varies depending on the type of the polyolefin used. For example, in the case of a polyethylene, the heating temperature is preferably 140 to 250°C, and particularly preferably 150 to 250°C, and in the case of a polypropylene, the heating temperature is preferably 160 to 250°C, and particularly preferably 180 to 250°C. If the heating temperature is 250°C or more, which is equal to or higher than the oxidative deterioration start temperature of the polyolefin resin, the deterioration tends to be accelerated.

### (4) A step of adding a plasticizer to the heated polyolefin resin, and mixing and kneading the components to prepare a polyolefin solution

In this step, a plasticizer is added to the heated polyolefin resin, and the components are mixed and melt-kneaded in the extruder to prepare a polyolefin solution. The preparation of the polyolefin solution is not particularly limited, but it is preferably performed in a twin-screw extruder. The ratio of the screw length (L) to the diameter (D), that is, the ratio L/D of the twin-screw extruder is preferably within the range of 20 to 100, and more preferably within the range of 35 to 70. If the L/D is less than 20, melt kneading may be insufficient. If the L/D exceeds 100, the retention time of the polyolefin solution may increase and deterioration may be accelerated.

### (5) A step of sucking and ejecting gases (the air and an inert gas) in the extruder after the preparation of the polyolefin solution

When the kneading of the polyolefin resin and the plasticizer is completed, gases (the air and the inert gas) in the extruder are dissolved in the prepared polyolefin solution, and bubbles may be generated due to the pressure applied to the solution and temperature change. In this step, it is preferable to suck and eject bubbles that may cause abnormal properties of the resin and poor appearance. The gases in the extruder come to coexist with the resin as a raw material when the kneading of the raw material starts. As the kneading progresses, the bubbles gradually agglomerate due to the pressure in the extruder, and gather in one place when the kneading is completed (at the final stage of the extruder). Therefore, for ejecting the air, a vent hole is formed in a place where bubbles gather in the extruder, that is, at the final stage where kneading is completed, and the air inside the extruder is ejected by a vacuum pump via an air stack. In this way, the gases contained in the polyolefin solution are ejected. Further, the gases are preferably sucked and ejected at a suction pressure preferably within the range of -10 to -300 kPa, more preferably -50 to -200 kPa, and particularly preferably -50 to -100 kPa. Sucking the gases at a suction pressure within the above-mentioned range can remove the bubbles contained in the polyolefin resin solution to provide a polyolefin solution that does not affect the appearance of the polyolefin microporous membrane.

### (6) A step of extruding the kneaded polyolefin solution from the extruder and discharging the polyolefin solution into a sheet from a die

In this step, the polyolefin solution is extruded from the extruder, and then discharged into a sheet from a die via a supplying pipe. The temperature of the supplying pipe in this step is preferably within the range of 150 to 300°C, and particularly preferably within the range of 180 to 250°C. Setting the temperature of the supplying pipe to 150°C or more makes it possible to maintain the molten state of the polyolefin solution. In addition, setting the temperature of the supplying pipe to 300°C or less makes it possible to minimize the deterioration of the polyolefin solution. The retention time of the polyolefin solution in the supplying pipe is preferably set within the range of 10 to 120 minutes, and particularly preferably set within the range of 10 to 90 minutes. Setting the retention time to 10 minutes or more makes it possible to sufficiently remove impurities from the polyolefin solution in the process in which the polyolefin solution stays in the supplying pipe. In addition, setting the retention time to 120 minutes or less makes it possible to minimize the deterioration of the polyolefin solution. The extrusion rate during extrusion of the polyolefin resin from the extruder is 1 to 10 m/min. The die used is usually a sheet die having a rectangular die shape. The die gap when a sheet die is used is usually 0.1 to 5 mm, and the die is heated to 140 to 250°C at the time of extrusion molding.

### (7) A step of cooling the polyolefin solution extruded into a sheet to form a gel-like sheet

The extrusion-molded product extruded into a sheet from the die is cooled to form a gel-like sheet. The cooling is preferably performed at a rate of 50°C/min or more to at least a temperature equal to or lower than the gelation temperature. Such cooling can fix a structure in which a polyolefin-based resin phase is microphase-separated by the plasticizer. The cooling is preferably performed to 25°C or less. When the cooling rate is within the above-mentioned range, the crystallinity is maintained within an appropriate range, and a gel-like sheet suitable for stretching is obtained. The cooling method may be a method of contacting the extrusion-molded product with a refrigerant such as cold air or cooling water, a method of contacting the extrusion-molded product with a cooling roll, or the like, but it is preferable to contact the extrusion-molded product with a roll cooled with a refrigerant.

### (8) A step of heating and stretching the gel-like sheet

Then, the gel-like sheet is stretched. The stretching of the gel-like sheet is also referred to as wet stretching. The wet stretching is performed in at least a uni-axial direction. The gel-like sheet can be uniformly stretched since it contains the plasticizer. After being heated, the gel-like sheet is preferably stretched at a predetermined ratio by a tenter method, a roll method, an inflation method, or a combination thereof. The stretching may be uni-axial stretching or biaxial stretching, but biaxial stretching is preferable. In the case of biaxial stretching, any of simultaneous biaxial stretching, stepwise stretching, and multistage stretching (for example, a combination of simultaneous biaxial stretching and stepwise stretching) may be used.

In the wet stretching, the final plane extension ratio (plane ratio) is, for example, preferably 3 times or more, and more preferably 4 times or more and 30 times or less in the case of uni-axial stretching. Further, in the case of biaxial stretching, the final plane extension ratio is preferably 9 times or more, more preferably 16 times or more, and still more preferably 25 times or more. The upper limit of the final plane extension ratio in wet stretching is preferably 100 times or less, and more preferably 64 times or less. In addition, the final stretching ratio in wet stretching is preferably 3 times or more in both the MD (machine direction: longitudinal direction) and the TD (width direction: transverse direction), and may be the same or different in the MD and the TD. At a stretching ratio of 5 times or more, improvement of the pin puncture strength can be expected. The stretching ratio in this step refers to the stretching ratio of the gel-like sheet immediately before being subjected to the next step based on the stretching ratio of the gel-like sheet immediately before this step. The TD is a direction orthogonal to (intersecting) the MD in plan view of the microporous membrane.

The stretching temperature is preferably set within the range of the crystal dispersion temperature (Tcd) of the polyolefin resin to (Tcd) + 30°C, more preferably set within the range of the crystal dispersion temperature (Tcd) + 5°C to the crystal dispersion temperature (Tcd) + 28°C, and particularly preferably set within the range of (Tcd) + 10°C to (Tcd) + 26°C. When the stretching temperature is within the above-mentioned range, rupture of the membrane due to stretching of the polyolefin resin is reduced, and high-ratio stretching is made possible. Herein, the crystal dispersion temperature (Tcd) means a value obtained by measuring the temperature characteristics of dynamic viscoelasticity based on ASTM D4065. The ultra high molecular weight polyethylene, polyethylene other than an ultra high molecular weight polyethylene, and polyethylene composition described above have a crystal dispersion temperature of about 90 to 100°C. Therefore, the stretching temperature when a polyethylene is used as a raw material can be set to, for example, 90°C or more and 130°C or less.

Due to the above-mentioned stretching, cleavage may occur between the polyethylene lamellae, the polyethylene phase may become finer, and a large number of fibrils may be formed. The fibrils form a three-dimensionally irregularly connected network structure. The stretching improves the mechanical strength and enlarges the pores, and when stretching is performed under appropriate conditions, it is possible to control the through-hole diameter and to achieve a high porosity even with a smaller membrane thickness. Therefore, the stretching is suitable for a safer high-performance battery separator.

### (9) A step of removing the plasticizer from the stretched gel-like sheet to form a microporous membrane (film)

Then, the plasticizer is removed from the stretched gel-like sheet so that a microporous membrane (film) may be formed. The plasticizer is removed by cleaning using a cleaning solvent. Since the polyolefin phase is phase-separated from the solvent phase for membrane formation, when the plasticizer is removed, a porous membrane is obtained, which is made of fibrils forming a fine three-dimensional network structure and has pores (voids) three-dimensionally irregularly communicating with each other. The cleaning solvent and the method for removing the plasticizer using the cleaning solvent are known, and therefore the description thereof will be omitted. For example, the methods disclosed in Japanese Examined Patent Publication No. H06-104736 and Japanese Patent Laid-open Publication No. 2002-256099 can be employed.

### (10) A step of drying the film

Then, the microporous membrane from which the plasticizer has been removed is dried by a heat drying method or an air drying method. The drying temperature is preferably equal to or lower than the crystal dispersion temperature (Tcd) of the polyolefin resin, and is particularly preferably lower than the Tcd by 5°C or more. The drying is preferably performed until the amount of the residual cleaning solvent is 5 mass% or less, and more preferably 3 mass% or less based on 100 mass% (dry weight) of the microporous membrane film. When the amount of the residual cleaning solvent is within the above-mentioned range, the porosity of the polyolefin microporous membrane is maintained during the subsequent microporous membrane film stretching step and heat treatment step, and deterioration of permeability is reduced.

Further, the dried film polyolefin microporous membrane may be heat-treated. The heat treatment stabilizes the crystals and homogenizes the lamellae. The heat treatment method used may be at least one of a heat fixing treatment and a heat relaxation treatment. The heat fixing treatment is a heat treatment of heating the membrane while holding both ends in the TD of the membrane so that the dimension of the membrane in the TD may remain unchanged. The heat fixing treatment is preferably performed by a tenter method or a roll method. The heat relaxation treatment is a heat treatment of heat-shrinking the membrane in the MD or the TD during heating. An example of the heat relaxation treatment method is the method disclosed in Japanese Patent Laid-open Publication No. 2002-256099. The heat treatment temperature is preferably within the range of the crystal dispersion temperature (Tcd) to the melting point (Tm) of the polyolefin resin.

In addition, the heat-treated polyolefin microporous membrane can be further subjected to a crosslinking treatment and a hydrophilization treatment. For example, the microporous membrane is crosslinked by irradiation with ionizing radiation such as α-rays, β-rays, γ-rays, or electron beams. In the case of electron beam irradiation, an electron dose of 0.1 to 100 Mrad is preferable, and an acceleration voltage of 100 to 300 kV is preferable. The crosslinking treatment increases the meltdown temperature of the microporous membrane. Further, the hydrophilization treatment can be performed by monomer grafting, a surfactant treatment, corona discharge or the like. The monomer grafting is preferably performed after the crosslinking treatment.

When the following conditions and the like are adopted, it is possible to produce a polyolefin microporous membrane having a pin puncture strength of 400 gf/20 um or more and 1,500 gf/20 um or less, and a range of fluctuation of the pin puncture strength of 1% or less.

Nitrogen supply position: a position that is located downstream from the raw material inlet of the extruder by 10% of the screw length of the extruder
Amount of nitrogen supplied: 10 to 50 L/min
Flow rate of supply: 10 to 20 m/sec
Plane extension ratio: 25 to 64 times

A polyolefin microporous membrane obtained by the method for producing a polyolefin microporous membrane according to the present invention described above has no abnormal properties of the resin, is excellent in quality, and can be suitably used as a secondary battery separator.

### [Battery separator]

The polyolefin microporous membrane produced by the production method of the present invention can be suitably used in both a battery containing an aqueous electrolytic solution and a battery containing a non-aqueous electrolyte. Specifically, the polyolefin microporous membrane can be preferably used as a separator for secondary batteries such as nickel-hydrogen batteries, nickel-cadmium batteries, nickel-zinc batteries, silver-zinc batteries, lithium secondary batteries, and lithium polymer secondary batteries. Above all, it is preferable to use the polyolefin microporous membrane as a separator for a lithium ion secondary battery containing a non-aqueous electrolyte.

In a lithium ion secondary battery, a positive electrode and a negative electrode are stacked with a separator interposed therebetween, and the separator contains an electrolytic solution (electrolyte). The structure of the electrode is not particularly limited, and a conventionally known structure can be used. For example, an electrode structure in which disc-shaped positive and negative electrodes are arranged so as to face each other (coin electrode), an electrode structure in which flat plate-shaped positive and negative electrodes are alternately stacked (stacked electrode), and an electrode structure in which stacked strip-shaped positive and negative electrodes are wound (wound electrode) can be employed.

The current collector, the positive electrode, the positive electrode active material, the negative electrode, the negative electrode active material, and the electrolytic solution used in the lithium ion secondary battery are not particularly limited, and conventionally known materials can be appropriately combined and used.

Hereinafter, the present invention will be described in more detail by way of examples and the like. The present invention is not limited to these examples, but is defined by the claims.

The measurement methods and evaluation methods are as follows.

### (1) Melt flow rate (MI)

The melt flow rate was measured according to the method A of JIS K 7210-1 (2014) at a test temperature of 230°C and a load of 2.16 kgf (21.18 N) (unit: g/10 min).

### (2) Weight average molecular weight (Mw)

The Mw was determined by gel permeation chromatography (GPC) under the following conditions.
Measuring device: GPC-150C manufactured by Waters Corporation
Column: Shodex UT806M manufactured by Showa Denko K.K.
Column temperature: 145°C
Solvent (mobile phase): 1,2,4-trichlorobenzene
Flow rate of solvent: 1.0 ml/min
Sample concentration: 0.1 mass% (dissolution conditions: 145°C/1 h)
Injection amount: 500 µl
Detector: Differential Refractometer manufactured by Waters Corporation
Calibration curve: A calibration curve was formed using a predetermined conversion constant from a calibration curve obtained using a monodisperse polystyrene standard sample.

### (3) Film appearance

The microporous membrane was cut to have a size of 95 mm × 95 mm, spread on an illuminating magnifier loupe (ILLUMINATING LUPE manufactured by PEAK) without wrinkles, and observed with transmitted light. The number of transparent spots having a major axis of 0.3 cm or more was counted. A microporous membrane with 3 or less spots was evaluated as S (excellent), a microporous membrane with more than 3 and 5 or less spots was evaluated as A (good), a microporous membrane with more than 5 and 10 or less spots was evaluated as B (acceptable), and a microporous membrane with more than 10 spots was evaluated as C (defective).

### (4) Blow-up of charged raw material

With an inert gas being supplied to an extruder under predetermined conditions, a powder raw material was charged from a feeder to an inlet of the extruder, and the state of the raw material blown up by the inert gas inside the hopper was visually observed. A state where the raw material did not blow up was evaluated as A (good), a state where the raw material blew up by about 1 to 10 cm was evaluated as B (acceptable), and a state where the raw material blew up by 10 cm or more was evaluated as C (defective).

### (5) Evaluation of stability of supply of inert gas

The extruder was continuously operated for 24 hours with an inert gas being supplied to the extruder under predetermined conditions, and the stability of the flow rate of the supplied gas was evaluated. An example with a variation of the supply flow rate after 24 hours of 1% or less based on the supply flow rate at the start of operation was evaluated as A (good), an example with a variation of the supply flow rate after 24 hours of 2 to 5% was evaluated as B (acceptable), and an example with a variation of the supply flow rate after 24 hours of 5% or more was evaluated as C (defective).

### (6) Fluctuation of discharge amount

A specified amount of raw material was charged into the extruder, and mixed and kneaded to produce a polyolefin solution. The polyolefin solution was extruded from the extruder, the weight of the polyolefin solution extruded per minute was weighed 10 times, and then the average of the extrusion amounts per minute and standard deviation were calculated. The value obtained by dividing the standard deviation of the extrusion amount by the average of the extrusion amount was calculated and evaluated as the fluctuation of the extrusion amount. An example with a fluctuation of the extrusion amount of 1% or less was evaluated as S (excellent), an example with a fluctuation of the extrusion amount of 1 to 2% was evaluated as A (good), an example with a fluctuation of the extrusion amount of 2 to 5% was evaluated as B (acceptable), and an example with a fluctuation of the extrusion amount of 5% or more was evaluated as C (defective).

### (7) Pin puncture strength and fluctuation

A multilayer microporous membrane having a membrane thickness T1 was pierced at a speed of 2 mm/sec with a needle having a spherical tip (radius of curvature R: 0.5 mm) and a diameter of 1 mm, and the maximum load then was measured. The measured value L1 of the maximum load was converted into the maximum load L2 at a membrane thickness of 20 um by the formula: L2 = (L1 × 20)/T1 to calculate the pin puncture strength. The measurement was performed 10 times, and the average and standard deviation were calculated. The value obtained by dividing the standard deviation by the average was calculated and evaluated as the fluctuation of the strength. An example with a fluctuation of the strength of 1% or less was evaluated as A (good), an example with a fluctuation of the strength of 1 to 4% was evaluated as B (acceptable), and an example with a fluctuation of the strength of 5% or more was evaluated as C (defective).

### [Examples 1 and 2]

According to the composition and conditions shown in Table 1, a polyolefin resin, liquid paraffin as a plasticizer, and tetrakis[methylene-3-(3,5-di-tert-butyl-4-hydroxyphenyl)-propionate]methane as an antioxidant (0.3 parts by mass based on 100 parts by mass of the polyolefin resin) were melt-kneaded in a twin-screw extruder shown in Fig. 1 to prepare a polyolefin resin composition. To the extruder, nitrogen was supplied from an inert gas supply port A (located downstream from a raw material inlet of the extruder by 10% of the screw length of the extruder). The polyolefin resin composition was supplied from the twin-screw extruder to a T-shaped die and extruded. Then, the resulting extrusion-molded product was cooled while being taken up by a cooling roll to form a gel-like sheet. The formed gel-like sheet was simultaneously biaxially stretched (wet stretched) using a tenter stretching machine under the stretching conditions shown in Table 1. The stretched gel-like sheet was fixed to a 20 cm × 20 cm aluminum frame plate, immersed in a methylene chloride bath temperature-controlled to 25°C, shaken at 100 rpm for 3 minutes to remove liquid paraffin, and air-dried at room temperature to give a dry membrane. The dry membrane was dry-stretched in the MD and the TD at 126°C at the dry stretching ratios shown in Table 1 using a batch-type stretching machine. Then, the membrane was subjected to a heat relaxation treatment by a tenter method while being shrunk at 126°C by 8%. The evaluation results of the obtained polyolefin microporous membrane are also shown in Table 1. In Table 1, UHMwPE indicates an ultra high molecular weight polyethylene having a Mw of 2.0 × 10⁶, HDPE indicates a high density polyethylene having a Mw of 6.0 × 10⁵, and PP indicates a polypropylene having a Mw of 3.0 × 10⁶. The resin concentration (mass%) in the melt-kneaded product (resin composition) indicates the content of the polyolefin resin based on the total of the polyolefin resin and the plasticizer. The resin concentration (mass%) in the melt-kneaded product (resin composition) indicates the content of the polyolefin resin based on the total of the polyolefin resin and the plasticizer. The retention time (min) is the time from extrusion from the extruder to the arrival at the die, and is calculated by "total volume of the polymer line/discharge amount". The stretching ratio indicates the plane extension ratio of the polyolefin microporous membrane after stretching (before the heat fixing treatment) based on the gel-like sheet before wet stretching.

### [Comparative Examples 1 and 2]

A polyolefin microporous membrane was produced in the same manner as in Examples 1 and 2 except that nitrogen was not supplied at the time of supply of the raw material to the twin-screw extruder.

### [Comparative Example 3]

A polyolefin microporous membrane was produced in the same manner as in Example 1 except that the amount of nitrogen supplied was changed to 50 L/min and the flow rate of supply of nitrogen was changed to 20 m/s at the time of supply of the raw material to the twin-screw extruder.

### [Comparative Example 4]

A polyolefin microporous membrane was produced in the same manner as in Example 1 except that the amount of nitrogen supplied was changed to 5 L/min and the flow rate of supply of nitrogen was changed to 2 m/s at the time of supply of the raw material to the twin-screw extruder.

### [Comparative Example 5]

A polyolefin microporous membrane was produced in the same manner as in Example 1 except that the amount of nitrogen supplied was changed to 15 L/min and the flow rate of supply of nitrogen was changed to 20 m/s at the time of supply of the raw material to the twin-screw extruder.

### [Comparative Example 6]

A polyolefin microporous membrane was produced in the same manner as in Example 1 except that the nitrogen supply position was changed to a supply position B (position of the raw material inlet of the extruder) shown in Fig. 1 at the time of supply of the raw material to the twin-screw extruder.

### [Comparative Example 7]

A polyolefin microporous membrane was produced in the same manner as in Example 1 except that the nitrogen supply position was changed to a supply position C (position that is located downstream from the raw material inlet of the extruder by 30% of the screw length of the extruder) shown in Fig. 1 at the time of supply of the raw material to the twin-screw extruder.

### [Comparative Example 8]

A polyolefin microporous membrane was produced in the same manner as in Example 1 except that the amount of nitrogen supplied was changed to 20 L/min and the flow rate of supply of nitrogen was changed to 30 m/s at the time of supply of the raw material to the twin-screw extruder.

### [Comparative Example 9]

A polyolefin microporous membrane was produced in the same manner as in Example 1 except that the suction pressure at a vent of the extruder was 0 kPa at the time of supply of the raw material to the twin-screw extruder.

The evaluation results of the polyolefin microporous membranes obtained in the comparative examples are shown in Table 1.

**[Table 1-1]**

| Conditions | | Example 1 | Example 2 | Comparative Example 1 | Comparative Example 2 | Comparative Example 3 | Comparative Example 4 |
|---|---|---|---|---|---|---|---|
| Resin composition | UHMwPE (mass%) | 25 | 10 | 25 | 10 | 25 | 25 |
| | HDPE (mass%) | 75 | 70 | 75 | 70 | 75 | 75 |
| | PP (mass%) | - | 20 | - | 20 | - | - |
| | Resin concentration (mass%) | 32 | 27 | 32 | 27 | 32 | 32 |
| | Antioxidant (mass%) | 0.3 | 0.3 | 0.3 | 0.3 | 0.3 | 0.3 |
| Production conditions | Kneading temperature (°C) | 200 | 200 | 200 | 200 | 200 | 200 |
| | Resin temperature (°C) | 230 | 230 | 230 | 230 | 230 | 230 |
| | Supplying pipe temperature (°C) | 210 | 210 | 210 | 210 | 210 | 210 |
| | Die temperature (°C) | 230 | 230 | 230 | 230 | 230 | 230 |
| | Retention time (min) | 75 | 90 | 75 | 90 | 75 | 75 |
| | Inert gas supply position | A | A | - | - | A | A |
| | Amount of inert gas supplied (L/min) | 20 | 20 | 0 | 0 | 50 | 5 |
| | Flow rate of supply of inert gas (m/s) | 10 | 10 | - | - | 20 | 2 |
| | Suction pressure at vent (kPa) | -100 | -100 | -100 | -100 | -100 | -100 |
| | Stretching temperature (°C) | 110 | 110 | 110 | 110 | 110 | 110 |
| | Stretching ratio (MD) | 8 | 5 | 8 | 5 | 8 | 8 |
| | Stretching ratio (TD) | 8 | 5 | 8 | 5 | 8 | 8 |
| | Dry stretching temperature (°C) | 126 | 126 | 126 | 126 | 126 | 126 |
| | Dry stretching ratio (MD) | 1.0 | 1.0 | 1.0 | 1.0 | 1.0 | 1.0 |
| | Dry stretching ratio (TD) | 1.5 | 1.5 | 1.5 | 1.5 | 1.5 | 1.5 |
| Evaluation | MI (g/10 min) | 1.7 | 21.3 | 2.6 | 28.1 | 1.7 | 1.81 |
| | Mw | 153 | 232 | 136 | 197 | 153 | 151 |
| | Blow-up of raw material | A | A | - | - | C | A |
| | Stability of supply of N2 | A | A | - | - | A | C |
| | Appearance | S | S | B | B | S | A |
| | Fluctuation of discharge | S | A | A | C | C | S |
| | Pin puncture strength (g/20 µm) | 1094 | 482 | 940 | 436 | 1106 | 1013 |
| | Fluctuation of pin puncture strength | A | A | B | C | C | B |

**[Table 1-2]**

| Conditions | | Comparative Example 5 | Comparative Example 6 | Comparative Example 7 | Comparative Example 8 | Comparative Example 9 |
|---|---|---|---|---|---|---|
| Resin composition | UHMwPE (mass%) | 25 | 25 | 25 | 25 | 25 |
| | HDPE (mass%) | 75 | 75 | 75 | 75 | 75 |
| | PP (mass%) | - | - | - | - | - |
| | Resin concentration (mass%) | 32 | 32 | 32 | 32 | 32 |
| | Antioxidant (mass%) | 0.3 | 0.3 | 0.3 | 0.3 | 0.3 |
| Production conditions | Kneading temperature (°C) | 200 | 200 | 200 | 200 | 200 |
| | Resin temperature (°C) | 230 | 230 | 230 | 230 | 230 |
| | Supplying pipe temperature (°C) | 210 | 210 | 210 | 210 | 210 |
| | Die temperature (°C) | 230 | 230 | 230 | 230 | 230 |
| | Retention time (min) | 75 | 75 | 75 | 75 | 75 |
| | Inert gas supply position | A | B | C | A | A |
| | Amount of inert gas supplied (L/min) | 15 | 20 | 20 | 20 | 20 |
| | Flow rate of supply of inert gas (m/s) | 20 | 10 | 10 | 30 | 10 |
| | Suction pressure at vent (kPa) | -100 | -100 | -100 | -100 | 0 |
| | Stretching temperature (°C) | 110 | 110 | 110 | 110 | 110 |
| | Stretching ratio (MD) | 8 | 8 | 8 | 8 | 8 |
| | Stretching ratio (TD) | 8 | 8 | 8 | 8 | 8 |
| | Dry stretching temperature (°C) | 126 | 126 | 126 | 126 | 126 |
| | Dry stretching ratio (MD) | 1.0 | 1.0 | 1.0 | 1.0 | 1.0 |
| | Dry stretching ratio (TD) | 1.5 | 1.5 | 1.5 | 1.5 | 1.5 |
| Evaluation | MI (g/10 min) | 1.75 | 2.02 | 2.28 | 1.96 | 1.75 |
| | Mw | 151 | 148 | 142 | 148 | 151 |
| | Blow-up of raw material | B | C | A | C | A |
| | Stability of supply of N2 | A | A | C | A | A |
| | Appearance | S | S | C | A | C |
| | Fluctuation of discharge | B | B | C | C | A |
| | Pin puncture strength (g/20 µm) | 1072 | 976 | 932 | 1067 | 1082 |
| | Fluctuation of pin puncture strength | A | B | C | C | B |

As is clear from the results in Table 1, the production method according to the embodiment of the present invention is capable of providing a polyolefin microporous membrane in a process in which the yield rate, quality, and yield are improved, because the method reduces abnormal properties of the polyolefin solution in the production process and is excellent in discharge accuracy of the polyolefin solution from the extruder.

### INDUSTRIAL APPLICABILITY

The method for producing a polyolefin microporous membrane according to the present invention is capable of providing a polyolefin microporous membrane in a process in which the yield rate, quality, and yield are improved, because the method reduces abnormal properties of the polyolefin solution in the production process. Therefore, the production method is suitable as a method for producing a polyolefin resin composition for a secondary battery separator.

## Claims

1. A method for producing a polyolefin microporous membrane, the method comprising the steps of:
melt-kneading a polyolefin resin and a plasticizer with an extruder to prepare a polyolefin solution, then discharging the polyolefin solution into a sheet from a die, and then stretching the sheet and removing the plasticizer,
wherein in the steps of supplying the polyolefin resin and the plasticizer to the extruder, and heating and kneading the polyolefin resin and the plasticizer in the extruder, at a stage after the polyolefin resin is charged into the extruder and before the plasticizer is charged, an inert gas is supplied to the extruder from a position that is located downstream from a raw material inlet of the extruder by 5 to 20% of a screw length of the extruder, and a resin composition is melt-kneaded in an inert gas atmosphere.

2. The method according to claim 1, wherein in a kneading step, the inert gas supplied to the extruder has a flow rate of 1 to 20 m/sec.

3. The method according to any one of claim 1 or 2, wherein the inert gas is nitrogen.

4. The method according to any one of claims 1 to 3, wherein a suction pressure during sucking a gas is within a range of -10 to -300 kPa.

5. The method according to any one of claims 1 to 4, wherein a retention time from extrusion of the polyolefin solution from the extruder to the discharge of the polyolefin solution into the sheet from the die is within a range of 10 to 120 minutes.

6. The method according to any one of claims 1 to 5, wherein the polyolefin resin has a weight average molecular weight of 10,000 or more and 10,000,000 or less as measured by a method according to the description.

## Patentansprüche

1. Verfahren zur Herstellung einer mikroporösen Polyolefin-Membran, wobei das Verfahren die folgenden Schritte umfasst:
das Schmelzkneten eines Polyolefin-Harzes und eines Weichmachers mit einem Extruder zur Herstellung einer Polyolefin-Lösung, das anschließende Abgeben der Polyolefin-Lösung aus einer Düse zu einer Folie und das anschließende Recken der Folie und Entfernen des Weichmachers,
wobei in den Schritten des Zuführens des Polyolefin-Harzes und des Weichmachers zu dem Extruder und Erhitzen und des Erhitzens und Kneten des Polyolefin-Harzes und des Weichmachers in dem Extruder in einem Stadium durchgeführt wird, nachdem der Extruder mit dem Polyolefin-Harz beschickt wurde und bevor er mit dem Weichmacher beschickt wird, dem Extruder ein Inertgas von einer Position, die sich 5 % bis 20 % der Schneckenlänge des Extruders stromab von einem Rohmaterial-Einlass des Extruders befindet, zugeführt wird und eine Harz-Zusammensetzung unter Inertgasatmosphäre schmelzgeknetet wird.

2. Verfahren nach Anspruch 1, wobei das dem Extruder zugeführte Inertgas im Knetschritt eine Durchflussgeschwindigkeit von 1 bis 20 m/s aufweist.

3. Verfahren nach einem der Ansprüche 1 oder 2, wobei das Inertgas Stickstoff ist.

4. Verfahren nach einem der Ansprüche 1 bis 3, wobei der Ansaugdruck während des Ansaugens eines Gases innerhalb eines Bereichs von -10 bis -300 kPa liegt.

5. Verfahren nach einem der Ansprüche 1 bis 4, wobei die Verweilzeit zwischen der Extrusion der Polyolefin-Lösung aus dem Extruder und dem Angeben der Polyolefin-Lösung aus der Düse zu der Folie innerhalb eines Bereichs von 10 bis 120 min liegt.

6. Verfahren nach einem der Ansprüche 1 bis 5, wobei das Polyolefin-Harz ein durch ein Verfahren gemäß der Beschreibung gemessenes gewichtsmittleres Molekulargewicht von 10.000 oder mehr und 10.000.000 oder weniger aufweist.

## Revendications

1. Procédé de production d'une membrane microporeuse de polyoléfine, le procédé comprenant les étapes consistant à :
malaxer à l'état fondu une résine de polyoléfine et un plastifiant avec une extrudeuse pour préparer une solution de polyoléfine, puis décharger la solution de polyoléfine en une feuille à partir d'une filière, puis étirer la feuille et retirer le plastifiant,
dans lequel dans les étapes de fourniture de la résine de polyoléfine et du plastifiant à l'extrudeuse, et de chauffage et de malaxage de la résine de polyoléfine et du plastifiant dans l'extrudeuse, à une étape après que la résine de polyoléfine soit chargée dans l'extrudeuse et avant que le plastifiant soit chargé, un gaz inerte est fourni à l'extrudeuse à partir d'une position qui est positionnée en aval d'une entrée de matière première de l'extrudeuse de 5 à 20 % d'une longueur de vis de l'extrudeuse, et une composition de résine est malaxée à l'état fondu dans une atmosphère de gaz inerte.

2. Procédé selon la revendication 1, dans lequel dans une étape de malaxage, le gaz inerte fourni à l'extrudeuse a un débit d'écoulement de 1 à 20 m/sec.

3. Procédé selon l'une quelconque des revendications 1 ou 2, dans lequel le gaz inerte est de l'azote.

4. Procédé selon l'une quelconque des revendications 1 à 3, dans lequel une pression d'aspiration pendant l'aspiration d'un gaz est dans une plage de -10 à -300 kPa.

5. Procédé selon l'une quelconque des revendications 1 à 4, dans lequel un temps de rétention de l'extrusion de la solution de polyoléfine de l'extrudeuse à la décharge de la solution de polyoléfine en la feuille à partir de la filière est dans une plage de 10 à 120 minutes.

6. Procédé selon l'une quelconque des revendications 1 à 5, dans lequel la résine de polyoléfine a un poids moléculaire moyen en poids de 10 000 ou plus et de 10 000 000 ou moins tel que mesuré par un procédé selon la description.
